# EUROPÄISCHE PATENTSCHRIFT

(11) **EP 3 362 709 B1**
(45) Veröffentlichungstag und Bekanntmachung des Hinweises auf die Patenterteilung: **07.07.2021**
(21) Anmeldenummer: 16797725.5
(22) Anmeldetag: 05.10.2016
(51) Int. Cl.: F16H 63/32

(54) **SCHALTGABEL FÜR EIN KRAFTFAHRZEUGWECHSELGETRIEBE**
SHIFT FORK FOR A MOTOR VEHICLE TRANSMISSION
FOURCHETTE DE DÉBRAYAGE POUR BOÎTE DE VITESSES DE VÉHICULE À MOTEUR

(30) Priorität: 16.10.2015 DE 102015220158
(43) Veröffentlichungstag der Anmeldung: 22.08.2018
(73) Patentinhaber: Schaeffler Technologies AG & Co. KG, 91074 Herzogenaurach (DE)
(72) Erfinder: SCHULTE, Andreas, 91054 Erlangen (DE)
(86) Internationale Anmeldenummer: PCT/DE2016/200462
(87) Internationale Veröffentlichungsnummer: WO 2017/063646

(56) Entgegenhaltungen:
- EP-A1- 1 304 512
- WO-A1-2016/139171
- JP-A- S57 190 158

## Beschreibung

### Gebiet der Erfindung

Die Erfindung betrifft eine Schaltgabel für ein Kraftfahrzeugwechselgetriebe mit einem gabelförmig ausgebildeten Grundkörper. Ferner betrifft die Erfindung eine Schalteinheit mit einer derartigen Schaltgabel und einer Schaltstange.

### Hintergrund der Erfindung

Eine gattungsgemäße Schaltgabel ist in EP 0 967 419 A1 beschrieben. Diese Schaltgabel weist einen gabelförmig ausgebildeten Grundkörper auf. Der Grundkörper ist ein Blechpressteil. In dem Grundkörper sind Führungsaugen ausgebildet, in den Führungsaugen sind Gleitlager aus gleitförderndem Kunststoff aufgenommen. An dem Blechpressteil sind außer den Gleitlagern aus Kunststoff auch noch Gleitschuhe aus ebenfalls gleitförderndem Kunststoff für den Eingriff der Schaltgabel in eine Schiebemuffe vorgesehen. Separat zu dem Blechpressteil ist ein Schaltarm für den Eingriff eines Schaltfingers oder ähnlichem gefertigt. Der Schaltarm ist verglichen zu dem dünnen Blech des Grundkörpers aus dickerem Material durch Feinstanzen hergestellt. Der Grundkörper und der Schaltarm sind mittels geeigneter bekannter Schweißverfahren miteinander verbunden. Der Einsatz von mehreren räumlich ineinandergreifenden sowie verschiebbar auf einer Schaltwelle angeordneten dieser Schaltgabeln soll mit der beschriebenen Ausführung der Schaltgabel ermöglicht werden.

Die Fertigung derartiger Schaltgabeln erfordert viele Umformschritte, und die fertigen Schaltgabeln sind vergleichsweise schwer. Zur Vermeidung dieser Nachteile sind im Stand der Technik Schaltgabeln vorgeschlagen, die ganz oder teilweise aus Kunststoff bestehen. EP 0 633 412 B1 und DE 10 2013 113 679 zeigen beispielsweise jeweils Schaltgabeln als Kunststoff-Metall-Verbundbauteile, bei denen Metallstrukturen mit Kunststoff umspritzt sind. Eine vollständig aus Kunststoff bestehende Schaltgabel ist aus DE 199 27 321 A1 bekannt.

Die Kunststoffschaltgabeln und Kunststoff-Metall-Verbundschaltgabeln aus dem Stand der Technik weisen den Nachteil auf, dass das Wärmedehnungsverhalten der zum Spritzen verwendeten Thermoplaste sich von dem Wärmeausdehnungskoeffizienten von Stahl unterscheidet. Dadurch müssen höhere Toleranzen vorgehalten werden, und eine ausreichend steife Befestigung der Schaltgabel auf der Schaltstange gestaltet sich schwierig.

### Aufgabe der Erfindung

Die Aufgabe der Erfindung ist es daher, eine Schaltgabel für ein Kraftfahrzeugwechselgetriebe mit einem gabelförmig ausgebildeten Grundkörper zu schaffen, die die vorstehend genannten Nachteile vermeidet Ferner ist es Aufgabe der Erfindung, eine Schalteinheit mit einer derartigen Schaltgabel bereitzustellen, die in allen Betriebszuständen an der Schaltstange sicher befestigt ist.

Diese Aufgabe ist nach dem Gegenstand des kennzeichnenden Teils des Anspruchs 1 dadurch gelöst, dass die Schaltgabel einen gabelförmig ausgebildeten Grundkörper aus Duroplast aufweist. Hochfeste Duroplaste weisen Längenausdehnungskoeffizienten auf, die dem von Stahl ähneln. So weist beispielsweise Hexigon PF 1110 einen Längenausdehnungskoeffizienten α von 13·10⁻⁶ K⁻¹ auf, was in etwa dem Längenausdehnungskoeffizienten von Stahl α_{Fe} 12·10⁻⁶ K⁻¹ entspricht. In dem für den Betrieb der Schaltgabel vorgesehenen typischen Temperaturbereich von - 30°C bis 120°C beträgt die Abweichung in der Längendehnung weniger als 0,2%. Bei mit einem derartigen Duroplast ummantelten Stahlbauteilen sind daher längendehnungsinduzierte zusätzliche Spannungen vemachlässigbar, so dass die Bauteile nicht voneinander abheben oder sich lösen.

Auch das Elastizitätsmodul von Duroplast ist deutlich konstanter über den relevanten Temperaturbereich im Vergleich zu Themoplasten. Die Steifigkeit des Schaltelements und damit der Schaltweg sind daher wenig temperaturabhängig, so dass der Fahrer ein gleichmäßiges Schaltgefühl wahrnimmt.

Aufgrund ihrer spröden Eigenschaften sind Duroplaste schwer zu bearbeiten. Während der Polykondensation entstehen zudem häufig Eigenspannungen, die die Schaltgabeln springen oder zerbröseln lassen. Dieser Nachteil kann etwas kompensiert werden, indem Füllstoffe zugesetzt werden, die als Fasern oder Mineralstoffe die Sprödheit reduzieren.

Für einen direkten Reibkontakt mit der Schiebemuffe eignen sich Duroplaste in der Regel nicht. In einer Ausgestaltung der Erfindung ist daher vorgesehen, die Enden der Schaltgabel mit Gleitschuhen zu versehen, die aus einem anderen Kunststoff bestehen. Dies kann ein Thermoplast, ein Elastomer oder ein anderer Duroplast mit optimierten Gleiteigenschaften sein.

Vorzugsweise besteht der gesamte Schaltgabelgrundkörper bis auf eventuelle Gleitschuhe aus dem gleichen Duroplast. Der Schaltgabelgrundkörper ist damit besonders einfach herzustellen.

Der Grundkörper kann aus Gründen der Steifigkeit der Schaltgabel für hohe Belastungen mit Sicken oder ähnlichen Verstärkungen versehen werden.

Die Aufgabe wird ebenfalls gelöst durch eine Schaltgabel aus Duroplast, die mit einer Schaltstange vorzugsweise aus Stahl verbunden ist. Die Schaltstange ist als Oberbegriff für eine Schaltschiene, eine Schaltwelle oder ein sonstiges längliches Schaltelement zur Anbindung der Schaltgabel anzusehen.

Um in axialer Richtung gut Schaltkräfte übertragen zu können, weist die Schaltstange vorzugsweise ein oder mehrere Nuten auf. Die Nuten können als Ringnuten umlaufend auf der Mantelfläche der Schaltstange angeordnet sein. An den Nutwänden, die vorzugsweise radial gerichtet sind, kann sich die Schaltgabel abstützen. Mehrere Nuten können eine Art Verzahnung bilden. Sind die Nutwände senkrecht, erzeugt ein axiales Verschieben der Schaltstange keine radiale Kraftkomponente, so dass die Verbindung zwischen der Schaltgabel und der Schaltstange im Gegensatz zu geneigten Flächen nicht aufweitet.

Die Schaltgabel kann an dem Grundkörper befestigte sowie die räumliche Struktur der Schaltgabel versteifende Formteile aufweisen. Dazu kann ein Schaltarm mit einem Schaltmaul vorgesehen sein, das zusätzlich eine versteifende Funktion übernimmt. Das Formteil ist entweder separat zu dem Grundkörper oder gemeinsam mit diesem hergestellt. Ist das Formteil aus Blech gefertigt, sind zu seiner Herstellung umformtechnische Verfahren wie Biegen, Pressen und Ziehen einsetzbar.

Eigenschaften der Schaltgabel, wie hohe Steifigkeit unter Belastung oder gewollt elastisches Nachgeben, sind gezielt durch die Ausführung und Befestigung des Formteiles zu erreichen. Mit Versteifungsrippen an dem Formteil oder am Schaltgabelgrundkörper, der Wahl eines Profils mit hohen oder niedrigen Widerstandsmomenten gegen Biegung und/oder Torsion, der Wahl der Befestigungsart des Formteiles an dem Grundkörper und der Lage der Befestigung des Formteiles an dem Grundkörper sind diese Eigenschaften zu beeinflussen.

Ein separates Führungsauge zur Anbindung des Schaltgabel an die Schaltstange ist nicht erforderlich.

### Kurze Beschreibung der Zeichnungen

Die Erfindung ist nachfolgend anhand eines Ausführungsbeispiels näher erläutert. Es zeigen:
- Figur 1: eine erfindungsgemäße Schaltgabel in einer perspektivischen Ansicht,
- Figur 2: die Schaltgabel nach Figur 1 in rückseitiger Ansicht,
- Figur 3: eine Schaltstange mit Nuten für die Schaltgabel nach den Figuren 1 und 2 und
- Figur 4: eine vergrößerte Darstellung der Nuten in der Schaltgabel nach Figur 3.

### Detaillierte Beschreibung der Zeichnungen

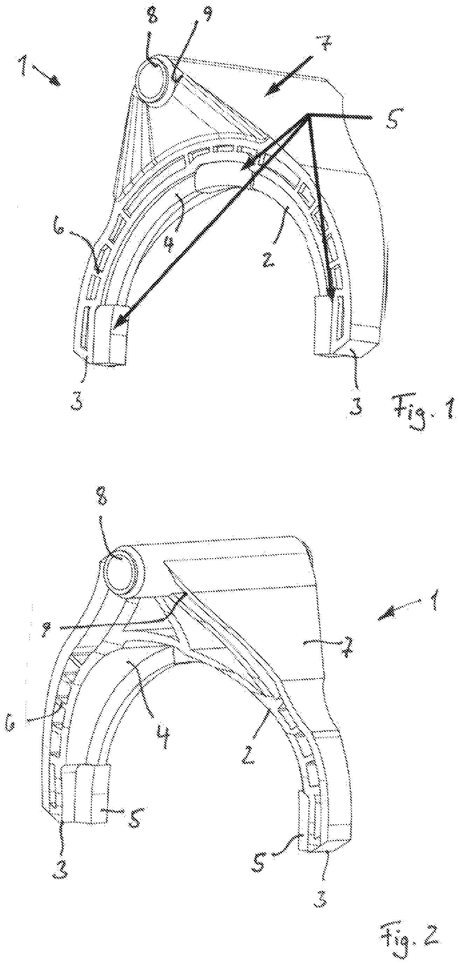

Die Figuren 1 und 2 zeigen eine Schaltgabel 1 für ein Kraftfahrzeugzahnräderwechselgetriebe. Die Schaltgabel 1 verschiebt in diesem eine nicht dargestellte Schiebemuffe.

Die Schaltgabel 1 weist einen gabelförmigen Grundkörper 2 mit einem im Querschnitt U-förmig ausgebildeten Profil von in seinem Verlauf wechselnder Breite auf. Der Grundkörper 2 ist bogenförmig gebogen und läuft in Gabelenden 3 aus. Die Gabelenden 3 sind etwa 180° versetzt zueinander und sind dazu bestimmt, eine Schiebemuffe zu umgreifen.

An den Gabelenden 3 sowie im Mittenbereich 4, der von den Gabelenden 3 jeweils etwa 90° versetzt ist, weist die Schaltgabel 1 Gleitschuhe 5 auf. Die Gleitschuhe 5 bestehen aus einem Gleitmaterial und sind vorliegend fest mit dem Grundkörper 2 verbunden.

Der Grundkörper 2 der Schaltgabel 1 weist Versteifungsrippen 6 auf. Durch die Versteifungsrippen 6 kann Material eingespart werden, ohne dass die Steifigkeit leidet.

Um die Schaltkräfte gut übertragen zu können, verbreitert sich der Grundkörper 2 von den Schaitgabelenden 3 zum Mittenbereich 4. Der von der Schiebemuffe abgewandte Rücken 7 verjüngt sich damit ausgehend von einer Schaltstange 8 hin zu den Gabelenden 3 gleichmäßig.

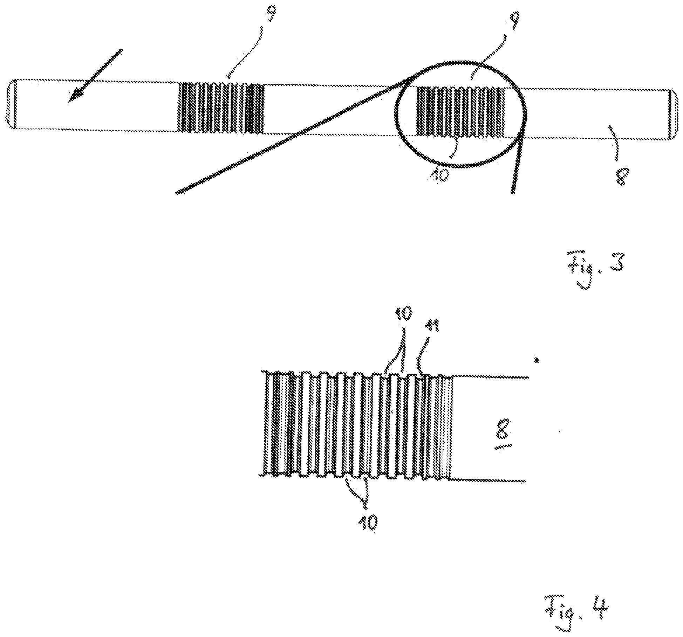

Die Schaltstange 8 weist im Bereich der Schaltgabeianbindung 9 mehrere Nuten 10 auf. Wie aus Figur 3 ersichtlich ist, können auf der Schaltstange 8 auch mehrere Abschnitte mit Nuten 10 angeordnet sein, um mehrere Schaltgabeln 1 anzubinden. Die Nutwände 11 der Nuten verlaufen radial, um bei axialer Verschiebung der Schaltstange keine Scherkräfte zu erzeugen, Das Einbringen mehrerer Nuten erlaubt einen verzahnungsähnlichen Eingriff, so dass auch Missbrauchskräfte sicher abgestützt werden.

### Bezugszeichen

- 1: Schaltgabel
- 2: Grundkörper
- 3: Gabelende
- 4: Mittenbereich
- 5: Gleitschuh
- 6: Versteifungsrippen
- 7: Rücken
- 8: Schaltstange
- 9: Schaltgabelanbindung
- 10: Nut
- 11: Nutwand

## Patentansprüche

1. Schaltgabel (1) für ein Kraftfahrzeugwechselgetriebe, **dadurch gekennzeichnet, dass** die Schaltgabel (1) einen gabelförmig ausgebildeten Grundkörper (2) aus Duroplast aufweist.

2. Schaltgabel (1) nach Anspruch 1, **dadurch gekennzeichnet, dass** der gabelförmig ausgebildete Grundkörper (2) Gleitschuhe (5) aufweist, welche aus einem sich von dem Werkstoff des Gabelkörpers (2) unterscheidenden Kunststoff ausgebildet sind.

3. Schaltgabel (1) nach Anspruch 1 oder 2, **dadurch gekennzeichnet, dass** der Duroplast des gabelförmig ausgebildeten Grundkörpers (2) Fasern oder Mineralstoffe aufweist.

4. Schaltgabel (1) nach einem der Ansprüche 1 bis 3, **dadurch gekennzeichnet, dass** die Schaltgabel (1) aus Duroplast besteht.

5. Schaltgabel (1) nach einem der Ansprüche 1 bis 3, **dadurch gekennzeichnet, dass** der Duroplast durch Hexigon PF 1110 gebildet ist.

6. Schalteinheit mit einer metallischen Schaltstange (8) und einer Schaltgabel (1) nach einem der vorhergehenden Ansprüche.

7. Schalteinheit nach Anspruch 6, **dadurch gekennzeichnet, dass** die Schaltstange (8) eine Mehrzahl von Nuten (10) im Bereich der Schaltgabelanbindung (9) aufweist und der Duroplast der Schaltgabel (1) sich in die Nuten erstreckt.

8. Schalteinheit nach Anspruch 7, **dadurch gekennzeichnet, dass** die Nutwände (11) parallel und radial verlaufen.

## Claims

1. A shift fork (1) for a motor vehicle transmission, **characterised in that** the shift fork (1) has a fork-shaped base body (2) made of thermosetting resin.

2. The shift fork (1) according to claim 1, **characterised in that** the fork-shaped base body (2) has sliding shoes (5) which are formed from a plastic that differs from the material of the fork body (2).

3. The shift fork (1) according to claim 1 or 2, **characterised in that** the thermosetting resin of the fork-shaped base body (2) has fibres or mineral substances.

4. The shift fork (1) according to one of claims 1 to 3, **characterised in that** the shift fork (1) consists of thermosetting resin.

5. The shift fork (1) according to one of claims 1 to 3, **characterised in that** the thermosetting resin is formed by Hexigon PF 1110.

6. A shifting unit having a metallic shifting rod (8) and a shift fork (1) according to one of the preceding claims.

7. The shifting unit according to claim 6, **characterised in that** the shifting rod (8) has a plurality of grooves (10) in the region of the shift fork connection (9) and the thermosetting resin of the shift fork (1) extends into the grooves.

8. The shifting unit according to claim 7, **characterised in that** the groove walls (11) extend in a parallel and radial manner.

## Revendications

1. Fourchette de débrayage (1) pour une boîte de vitesses de véhicule à moteur, **caractérisée en ce que** la fourchette de débrayage (1) comporte un corps de base (2) en forme de fourchette en résine thermodurcissable.

2. Fourchette de débrayage (1) selon la revendication 1, **caractérisée en ce que** le corps de base (2) en forme de fourchette comporte des patins de glissement (5), lesquels sont conçus en matière plastique différente de la matière du corps de fourchette (2).

3. Fourchette de débrayage (1) selon la revendication 1 ou 2, **caractérisée en ce que** la résine thermodurcissable du corps de base (2) en forme de fourchette comporte des fibres ou des matières minérales.

4. Fourchette de débrayage (1) selon l'une quelconque des revendications 1 à 3, **caractérisée en ce que** ladite fourchette de débrayage (1) est en résine thermodurcissable.

5. Fourchette de débrayage (1) selon l'une quelconque des revendications 1 à 3, **caractérisée en ce que** la résine thermodurcissable est formée par l'Hexigon PF 1110.

6. Unité de débrayage comportant une tige de débrayage (8) métallique et une fourchette de débrayage (1) selon l'une quelconque des revendications précédentes.

7. Unité de débrayage selon la revendication 6, **caractérisée en ce que** la tige de débrayage (8) comporte une pluralité de rainures (10) dans la zone de la liaison de fourchette de débrayage (9) et la résine thermodurcissable de la fourchette de débrayage (1) s'étend dans les rainures.

8. Unité de débrayage selon la revendication 7, **caractérisée en ce que** les parois de rainure (11) s'étendent parallèles et radiales.
